(19) Europäisches Patentamt
European Patent Office
Office européen des brevets

(11) **EP 4 556 971 A1**

(12) **EUROPEAN PATENT APPLICATION**

(43) Date of publication:
**21.05.2025   Bulletin 2025/21**

(21) Application number: **24186681.3**

(22) Date of filing: **04.07.2024**

(51) International Patent Classification (IPC):
**G02B 6/126** (2006.01)    **G02B 6/12** (2006.01)

(52) Cooperative Patent Classification (CPC):
**G02B 6/126;** G02B 2006/12038; G02B 2006/12054;
G02B 2006/12116; G02B 2006/12128

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.11.2023   US 202363599231 P
15.11.2023   US 202363599264 P
05.04.2024   US 202418628229**

(71) Applicant: **Viavi Solutions Inc.**
**Chandler, AZ 85286 (US)**

(72) Inventors:
• **HOUCK, William D.**
**Santa Rosa, 95404 (US)**
• **OCKENFUSS, Georg J.**
**Santa Rosa, 95404 (US)**

(74) Representative: **Murgitroyd & Company**
**165-169 Scotland Street**
**Glasgow G5 8PL (GB)**

(54) **MULTI-LAYERED MATERIALS FOR USE IN WAVEGUIDES**

(57)    A waveguide includes a plurality of sets of layers arranged in a stack. Each set of layers includes a first layer that comprises at least tantalum and oxygen, and a second layer that comprises at least silicon and oxygen. The waveguide is configured to propagate light associated with a particular wavelength in a first direction that is orthogonal to a second direction in which the plurality of sets of layers are arranged in the stack. A quantity of the plurality of sets of layers is greater than or equal to 15. Respective thicknesses of the first layer and the second layer, in the second direction, are less than or equal to a fifteenth of the particular wavelength.

FIG. 1A

EP 4 556 971 A1

## Description

CROSS-REFERENCE TO RELATED APPLICATION

This Patent Application claims priority to U.S. Patent Application No. 63/599,264, filed on November 15, 2023, and entitled "WAVEGUIDE WITH TUNED EFFECTIVE REFRACTIVE INDEX," and to U.S. Patent Application No. 63/599,231, filed on November 15, 2023, and entitled "MULTI-LAYERED MATERIALS FOR USE IN WAVEGUIDES." The disclosures of the prior Applications are considered part of and are incorporated by reference into this Patent Application.

BACKGROUND

A waveguide confines and guides light (e.g., by enabling multiple internal reflections of the light), which allows the light to propagate within the waveguide (e.g., from an input end of the waveguide to an output end of the waveguide). A waveguide can be used in various applications, such as fiber optics and integrated optical circuits.

SUMMARY

In some implementations, a waveguide includes a substrate; and a plurality of sets of layers disposed on the substrate in a stack, wherein each set of layers includes: a first layer that comprises at least tantalum and oxygen; and a second layer that comprises at least silicon and oxygen, wherein: the waveguide is configured to propagate light associated with a particular wavelength in a first direction that is orthogonal to a second direction in which the plurality of sets of layers are disposed on the substrate in the stack, and respective thicknesses of the first layer and the second layer, in the second direction, are less than or equal to a fifteenth of the particular wavelength.

The first layer may comprise at least a tantalum pentoxide ($Ta_2O_5$) material; and the second layer may comprise at least a silicon dioxide ($SiO_2$) material.

The respective thicknesses of the first layer and the second layer, in the first direction, may be greater than or equal to 1 nanometer and less than or equal to 20 nanometers.

A quantity of the plurality of sets of layers may be greater than or equal to 15.

The plurality of sets of layers may comprise a form birefringent (FB) stack.

The particular wavelength may be associated with a spectral range from 400 to 799 nanometers.

The plurality of sets of layers may cause the waveguide to have, for the particular wavelength, an ordinary refractive index associated with the first direction and an extraordinary refractive index associated with the second direction.

The extraordinary refractive index, for the particular wavelength, may be less than a refractive index of the first layer and greater than a refractive index of the second layer.

The waveguide may be associated with a propagation loss parameter that is less than at least one of a propagation loss parameter associated with the first layer or a propagation loss parameter associated with the second layer.

In some implementations, a waveguide includes a plurality of sets of layers arranged in a stack, wherein each set of layers includes: a first layer that comprises at least tantalum and oxygen; and a second layer that comprises at least silicon and oxygen, wherein: the waveguide is configured to propagate light associated with a particular wavelength in a first direction that is orthogonal to a second direction in which the plurality of sets of layers are arranged in the stack, and a quantity of the plurality of sets of layers is greater than or equal to 15.

The first layer may comprise at least a tantalum pentoxide ($Ta_2O_5$) material; and the second layer may comprise at least a silicon dioxide ($SiO_2$) material.

The respective thicknesses of the first layer and the second layer, in the first direction, may be greater than or equal to 1 nanometer and less than or equal to 20 nanometers.

The plurality of sets of layers may cause the waveguide to have, for the particular wavelength, an ordinary refractive index associated with the first direction and an extraordinary refractive index associated with the second direction.

The extraordinary refractive index, for the particular wavelength, may be less than a refractive index of the first layer and greater than a refractive index of the second layer.

The waveguide may be associated with a propagation loss parameter that is less than at least one of a propagation loss parameter associated with the first layer or a propagation loss parameter associated with the second layer.

In some implementations, a waveguide includes a plurality of sets of layers arranged in a stack, wherein each set of layers includes: a first layer that comprises at least a first material; and a second layer that comprises at least a second material, wherein: the waveguide is configured to propagate light associated with a particular wavelength in a first direction that is orthogonal to a second direction in which the plurality of sets of layers are arranged in the stack, and a quantity of the plurality of sets of layers is greater than or equal to 15.

The waveguide may be associated with a propagation loss parameter that is less than at least one of a propagation loss parameter associated with the first layer or a propagation loss parameter associated with the second layer.

The respective thicknesses of the first layer and the second layer, in the first direction, may be greater than or equal to 1 nanometer and less than or equal to 20 nanometers.

The plurality of sets of layers may cause the waveguide to have, for the particular wavelength, an extraordinary refractive index associated with the second direction.

The extraordinary refractive index, for the particular wavelength, may be less than a refractive index of the first layer and greater than a refractive index of the second layer.

BRIEF DESCRIPTION OF THE DRAWINGS

Figs. 1A-1B are diagrams of an example waveguide.
Figs. 2A-2B are diagrams of the example waveguide with respect to a plurality of modes of light that is propagated by the waveguide.

DETAILED DESCRIPTION

The following detailed description of example implementations refers to the accompanying drawings. The same reference numbers in different drawings may identify the same or similar elements.

Waveguide dimensions may be based on refractive indices of a material from which the waveguide is manufactured. For example, to achieve mode coupling (or other applications), a waveguide may have a particular dimension that is related to one or more refractive indices of one or more materials from which the waveguide is manufactured. Optically transparent materials may have a discrete refractive index for a particular wavelength. For example, a tantalum oxide material ($Ta_2O_5$) may have a refractive index of 2.09 at 850 nanometers (nm). However, in some use cases, it may be desirable to use such a material, but have a different refractive index (e.g., to enable use of a different dimension for a waveguide). For example, in some use cases, it may be desirable to have a refractive index of 2.05 while using the tantalum oxide material.

Further, in some scenarios, different production processes result in different refractive indices. For example, a magnetron sputtering process used to manufacture a waveguide with the tantalum oxide material may result in a refractive index of the tantalum oxide material being 2.125. This may occur as a result of many factors, such as whether a manufactured structure is polycrystalline, nano-polycrystalline, or amorphous; a density of the manufactured material; a stoichiometry of the manufactured material; or another factor. Accordingly, it may be desirable to adjust a refractive index of a manufactured material from a first refractive index (e.g., an actual value of 2.125) to a second refractive index (e.g., a desired value of 2.09) that is selected for a particular use case.

One technique for achieving a desired refractive index is to alter a configuration of a deposition process used to manufacture a waveguide. For example, a process controller can change gas flows, process pressure, power applied to a target, or another parameter to adjust a resulting refractive index. However, adjusting the configuration of the deposition process may have negative impacts on performance of the waveguides, such as by increasing absorption loss (e.g., in a case of sub-stoichiometric compounds) or scatter loss (e.g., due to an increase in roughness). Another technique for achieving a desired refractive index is doping or mixing a particular material (e.g., the tantalum oxide material) with a second material (e.g., a silicon oxide material ($SiO_2$)) to achieve a desired refractive index. However, using doping or mixing of different materials may result in manufacturability difficulties. For example, to achieve a desired refractive index, a very precise target composition for each individual refractive index may be difficult to achieve. Additionally, some sets of materials do not mix well to form a homogeneous composite target, which results in undesirable variations in refractive index. For example, it has been observed that silicon (Si) and germanium (Ge) do not mix well.

Some implementations described herein include a waveguide with multiple sets of layers arranged in a stack. Each set includes a first layer and a second layer, wherein a thickness of each layer is thin relative to the wavelength of light for which the waveguide is configured (e.g., the thickness is at least a fifteenth of the wavelength). Further, a quantity of the sets of the layers may be greater than or equal to a quantity threshold (e.g., 15 or more). In this way, the multiple sets of layers comprise a form birefringent (FB) stack, and thereby cause the waveguide to have an ordinary refractive index ($n_o$) associated with a first direction (e.g., a propagation direction of the light within the waveguide) and an extraordinary refractive index ($n_e$) associated with a second direction (e.g., a stacking direction of the multiple sets of layers). Further, the quantity of the multiple sets of layers and/or a thickness of each layer in a set of layers can be selected to cause the waveguide to have a particular ordinary refractive index ($n_o$) and/or a particular extraordinary refractive index ($n_e$).

In this way, the multiple sets of layers enable fine-tuning of an ordinary refractive index ($n_o$) and/or an extraordinary refractive index ($n_e$), thereby enabling achievement of precise refractive indices for different use cases. By achieving precise refractive indices, some implementations increase waveguide design flexibility. Further, the quantity of the multiple sets of layers and/or a thickness of each layer in a set of layers can be selected to cause the waveguide to provide an optimal quantity (e.g., a preferred quantity of modes) of a plurality of modes of the light to propagate through the waveguide and/or to prevent, or minimize, optical loss associated with propagation of the plurality of modes. This further enables use of the waveguide for different use cases where a more lossy waveguide is not practical.

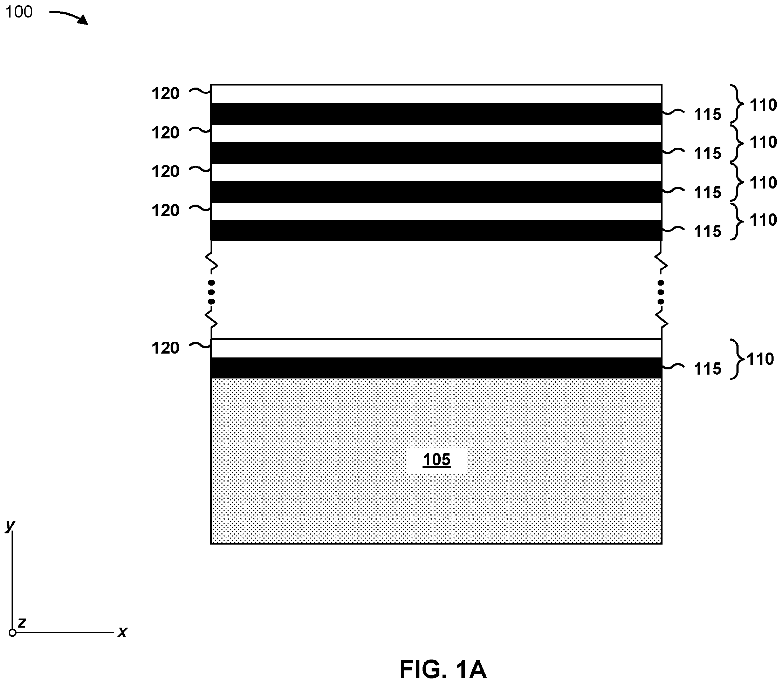

Figs. 1A-1B are diagrams of an example waveguide 100. In some implementations, the waveguide 100 may include a substrate 105 and a plurality of sets of layers 110 (e.g., two or more sets of layers 110) disposed on the substrate (e.g., on a top surface of the substrate 105, as shown in Figs. 1A-1B). The plurality of sets of layers 110 may be arranged in a stack (e.g., the plurality of sets of layers 110 may be disposed on the substrate in a stack). Figs. 1A-1B show example stack ups of the waveguide 100.

The waveguide 100 may be configured to propagate light in a first direction. For example, the waveguide 100 may be configured to propagate light in a first direction that is parallel to the z-axis shown in Figs. 1A-1B. Put another way, the waveguide 100 may be configured to propagate light in a first direction that is orthogonal to a second direction (e.g., that is parallel to the y-axis) in which the plurality of sets of layers 110 are arranged in a stack (e.g., on the substrate 105). That is, Figs. 1A-1B show views of an end (e.g., an input end or an output end) of the waveguide 100, and light may propagate into or out of the waveguide 100 via the end.

The waveguide 100 may be configured to propagate light associated with a spectral range, such as light associated with wavelengths from 350 nm to 5000 nm (e.g., greater than or equal to 350 nm and less than or equal to 5000 nm), from 420 nm to 1600 nm, or another range. As another example, the spectral range may include one or more subranges of light associated with ultraviolet light through infrared light, such as one or more portions of ultraviolet light (e.g., one or more portions of light associated with wavelengths from 200 nm to 399 nm), one or more portions of visible light (e.g., one or more portions of light associated with wavelengths from 400 nm to 799 nm), and/or one or more portions of infrared light (e.g., one or more portions of light associated with wavelengths from 800 nm to 5000 nm). In some implementations, the waveguide 100 may be configured to propagate light associated with a particular wavelength, such as light associated with a spectral range that is centered at the particular wavelength. For example, the waveguide 100 may be configured to propagate light associated with a spectral range centered at 785 nm (e.g., a spectral range from 770 nm to 800 nm that is centered at 785 nm).

The substrate 105 may comprise a glass substrate, a polymer substrate, a polycarbonate substrate, a silicon (Si) substrate, a germanium (Ge) substrate, or an active device wafer (e.g., that comprises a photodiode (PD), a PD array, an avalanche photodiode (APD), an APD array, a charge-coupled device (CCD) sensor, and/or a complementary metal oxide semiconductor (CMOS) sensor, among other examples). In some implementations, a thickness of the substrate 105 may be greater than or equal to 10 microns ($\mu$m), 50 $\mu$m, and/or 500 $\mu$m. Additionally, or alternatively, the thickness of the substrate 105 may be less than or equal to a particular thickness threshold. The particular thickness threshold, for example, may be less than or equal to 10 millimeters (mm) or 5 mm.

Each set of layers 110, of the one or more sets of layers 110, may include a first layer 115 and a second layer 120. The second layer 120 may be disposed over (e.g., directly or indirectly on) the first layer 115 (e.g., in a stack, such as in the second direction). For example, as shown in Figs. 1A-1B, a first surface (e.g., a bottom surface) of the second layer 120 may be disposed on (e.g., directly on) a surface (e.g., a top surface) of the first layer 115. In some implementations, one or more other layers may be disposed between the first layer 115 and the second layer 120. That is, in some implementations, each set of layer 110 may include two or more layers.

The first layer 115 may comprise a first material. The first layer material may comprise at least a first oxide, such as a tantalum pentoxide ($Ta_2O_5$) material, a silicon dioxide ($SiO_2$) material, niobium pentoxide ($Nb_2O_5$) material, a niobium titanium oxide ($NbTiO_x$) material, a niobium tantalum pentoxide ($Nb_{2-x}Ta_xO_5$) material, a titanium dioxide ($TiO_2$) material, an aluminum oxide ($Al_2O_3$) material, a zirconium oxide ($ZrO_2$) material, an yttrium oxide ($Y_2O_3$) material, or a hafnium oxide ($HfO_2$) material, among other examples. Additionally, or alternatively, the first material may include at least one of tantalum and oxygen; niobium, titanium, and oxygen; hydrogen and germanium; hydrogen and silicon; silicon and germanium; hydrogen, silicon, and germanium; silicon; or germanium. For example, the first material may include at least one of a tantalum pentoxide ($Ta_2O_5$) material, a niobium titanium oxide ($NbTiO_x$) material, a germanium (Ge) material, a hydrogenated germanium (Ge:H) material, a silicon germanium (SiGe) material, a hydrogenated silicon germanium (SiGe:H) material, a silicon (Si) material, an amorphous silicon (a Si) material, a silicon and hydrogen (SiH) material, a hydrogenated silicon (Si:H) material, or a germanium (Ge) material, and, in some implementations, one or more other elements or materials. In some implementations, the first material may include at least tantalum and oxygen. For example, the first material may comprise a tantalum pentoxide ($Ta_2O_5$) material and, in some implementations, one or more other elements or materials (e.g., tantalum, oxygen, hydrogen, silicon, aluminum, nitrogen, a silicon dioxide ($SiO_2$) material, and/or an aluminum nitride (AlN) material).

Accordingly, the first layer 115 may have a refractive index from 1.9 to 2.5 (e.g., greater than or equal to 1.9 and less than or equal to 2.5) for light associated with a spectral range (e.g., from 400 nm to 799 nm, or another spectral range).

The second layer 120 may comprise a second material. The second material may include at least a second oxide, such as at least a silicon dioxide ($SiO_2$) material, and/or one or more other elements or materials (e.g., silicon; oxygen; a silicon oxide ($SiO_x$) material, where x is less than 2; a silicon nitride (SiN) material; an aluminum silicon (AlSi) material; and/or another material). In some implementations, the second material may include at least one of silicon and oxygen, aluminum and oxygen, or magnesium and fluorine. For example, the second material may include at least one of a silicon dioxide ($SiO_2$) material, an aluminum oxide ($Al_2O_3$) material, or magnesium fluoride (MgF) material, and, in some implementations, one or more other elements or materials. Accordingly, the second layer 120 may have a refractive index from 1.3 to 1.8 (e.g., greater than or equal to 1.3 and less than or equal to 1.8) for light associated with a spectral range (e.g., from 400 nm to 799 nm, or another spectral range).

In some implementations, each layer of a set of layers 110 is associated with a particular thickness (e.g., in the second direction, which is parallel to the *y*-axis shown in Figs. 1A-1B). For example, each of the first layer 115 and the second layer 120 may have a respective thickness in a range from 1 nm to 20 nm (e.g., a thickness that is greater than or equal to 1 nm and less than or equal to 20 nm). In some implementations, each of the first layer 115 and the second layer 120 may have a thickness in a range from 1 nm to a thickness threshold (e.g., a thickness that is greater than or equal to 1 nm and less than or equal to the thickness threshold). The thickness threshold may be, for example, associated with the light that the waveguide 100 is configured to propagate. For example, when the waveguide 100 is configured to propagate light associated with a particular wavelength (e.g., as described above), the thickness threshold may be a fifteenth, a twentieth, a twenty-fifth, or a thirtieth, among other examples, of the particular wavelength. In this way, each of the first layer 115 and the second layer 120 may be referred to as a "thin" layer.

In some implementations, a layer of a first set of layers 110 may have a same thickness as, or a different thickness than, a corresponding layer of a second set of layers 110. For example, a first layer 115 and a second layer 120 of the first set of layers 110 may have respective thicknesses that are the same as (e.g., equal to, within a threshold that may be less than or equal to 1 nm) corresponding thicknesses of a first layer 115 and a second layer 120 of the second set of layers 110. Alternatively, the first layer 115 and the second layer 120 of the first set of layers may have respective thicknesses that are different than the first layer 115 and the second layer 120 of the second set of layers 110. Accordingly, each set of layers 110, of the plurality of sets of layers 110, may have a thickness profile that is the same as, or different than, a thickness profile of another set of layers 110 of the plurality of sets of layers 110.

In some implementations, a quantity of the plurality of sets of layers 110 may satisfy (e.g., be greater than or equal to) a quantity threshold. The quantity threshold may be, for example, greater than or equal to 15, 16, 17, 18, 19, 20, or so on. That is, a quantity of the plurality of sets of layers 110, when arranged in a stack (e.g., on the substrate 105), may be greater than or equal to the quantity threshold.

Accordingly, a layer thickness of each layer in a set of layers 110 and/or a quantity of the plurality of layers 110 may be selected to cause the plurality of sets of layers 110 to comprise a form birefringent (FB) stack. For example, the plurality of sets of layers 110 may cause the waveguide 100 to have, for the particular wavelength of light that the waveguide 100 is configured to propagate, an ordinary refractive index ($n_o$) associated with the first direction (e.g., the propagation direction of the light, which is parallel to the z-axis in Figs. 1A-1B) and an extraordinary refractive index ($n_e$) associated with the second direction (e.g., the stack direction of the plurality of layers 110, which is parallel to the *y*-axis in Figs. 1A-1B) that are different than each other (i.e., $n_o \neq n_e$).

As a specific example, when a layer thickness of the first layer 115 ($d_H$) and a layer thickness of the second layer 120 ($d_L$) of each set of layers 110 are substantially less than the particular wavelength (e.g., are less than or equal to the thickness threshold), and a quantity of the plurality of layers 110 is substantially high (e.g., greater than or equal to the quantity threshold), the ordinary refractive index ($n_o$) and the extraordinary refractive index ($n_e$) of the waveguide 100 may be described by the following functions associated with the effective medium theory (EMT):

$$n_o = \sqrt{(1-f)(n_L)^2 + f(n_H)^2},$$

$$n_e = 1/\sqrt{(1-f)/(n_L)^2 + f/(n_H)^2},$$

and

$$f = \frac{d_H}{d_H + d_L},$$

where $n_H$ is the refractive index of the first layer 115 (e.g., for the particular wavelength), $n_L$ is the refractive index of the second layer 120 (e.g., for the particular wavelength), and $n_H$ is greater than $n_L$. Accordingly, the layer thickness of each layer in a set of layers 110 and/or a quantity of the plurality of layers 110 may be selected to cause the waveguide 100 to have a particular ordinary refractive index ($n_o$) and/or a particular extraordinary refractive index ($n_e$). In some implementations, the particular extraordinary refractive index ($n_e$) may be less than the refractive index of the first layer 115 ($n_H$) and greater than the refractive index of the second layer 120 ($n_L$).

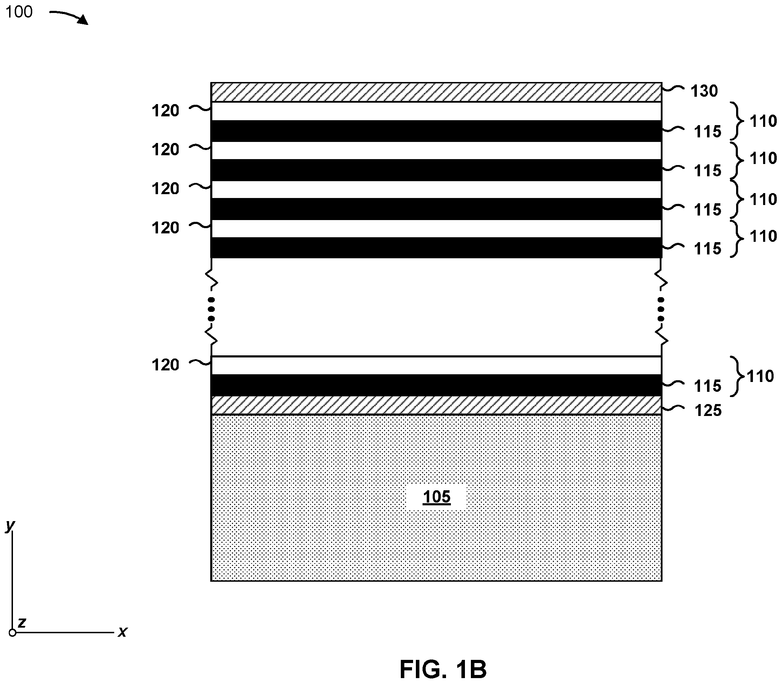

As shown in Fig. 1B, the waveguide 100 may include a first other layer 125 disposed between the plurality of sets of layers 110 and the substrate 105, and/or may include a second other layer 130 disposed on the plurality of sets of layers 110. Each of the first other layer 125 and/or the second other layer 130 may be configured as a cladding layer, a passivation layer, a protection layer, and/or another type of layer. Each of the first other layer 125 and/or the second other layer 130 may comprise at least an oxide. For example, each of the first other layer 125 and/or the second other layer 130 may include an oxide material (e.g., a silicon dioxide ($SiO_2$) material) and, in some implementations, one or more other elements or materials (e.g., silicon, oxygen, and/or other materials). Additionally, or alternatively, each of the first other layer 125 and/or the second other layer 130 may comprise at least a polymer material (e.g., at least a siloxane polymer material or another polymer material) or at least an air cladding, among other examples.

As indicated above, Figs. 1A-1B are provided as examples. Other examples may differ from what is described with regard to Figs 1A-1B. In practice, the waveguide 100 may include additional layers, components, and/or structures; fewer layers, components, and/or structures; different layers, components, and/or structures; or differently arranged layers, components, and/or structures than those shown in Figs. 1A-1B. For example, within a set of layers 110, the first layer 115 may be disposed over (e.g., directly or indirectly on) the second layer 120.

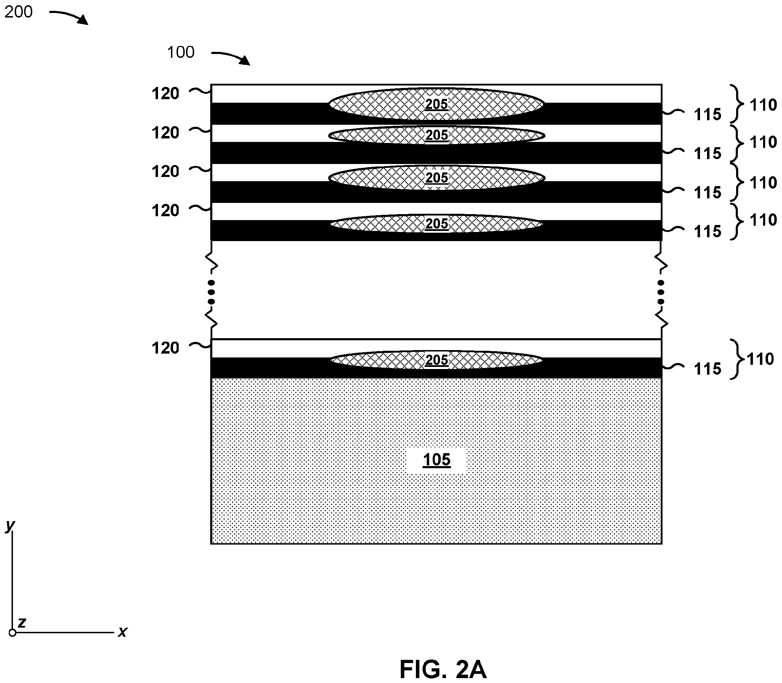

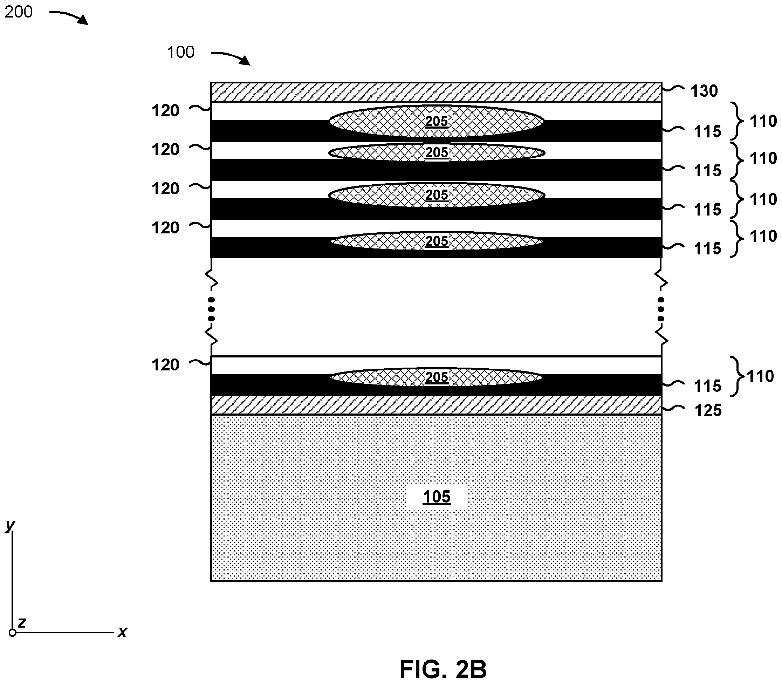

Figs. 2A-2B are diagrams 200 of the example waveguide 100 with respect to a plurality of modes 205 of light that is propagated by the waveguide 100. As shown in Figs. 2A-2B, a mode 205, of the plurality of modes 205, may propagate within each set of layers 110. That is, the light may enter the waveguide 100 via an input end of the waveguide 100 and may propagate respectively, within the plurality of sets of layers 110, as the plurality of modes 205.

In some implementations, a quantity of the plurality of sets of layers 110 and/or a thickness of each layer in a set of layers 110 may be selected to provide an optimal quantity (e.g., a preferred quantity of modes) of the plurality of modes 205 and/or to prevent, or to minimize, optical loss associated with propagation of the plurality of modes 205. For example, the quantity of the plurality of layers 110 and/or a layer thickness of each layer in a set of layers 110 may be selected to enable the plurality of modes 205 to propagate without interference (or with minimal interference) within the waveguide 100.

Accordingly, the waveguide 100 may be associated with a propagation loss parameter ($\alpha$) that satisfies a propagation loss parameter threshold. That is, the waveguide 100 (e.g., due to an "effective" aggregation of respective propagation loss parameters of the first layer 115 and the second layer 120 of each of the sets of layers 110) may have a propagation loss parameter that is less than or equal to the propagation loss parameter threshold. The propagation loss parameter threshold may be less than or equal to 0.08 decibels per centimeter $(\frac{dB}{cm}), 0.1\frac{dB}{cm}, 0.2\frac{dB}{cm}, 0.3\frac{dB}{cm}$, $0.4\frac{dB}{cm}, 0.47\frac{dB}{cm}, 0.5\frac{dB}{cm}$, and/or $0.55\frac{dB}{cm}$, among other examples. In some implementations, the waveguide 100 may have a propagation loss parameter that is greater than or equal to $0.08\frac{dB}{cm}$ and less than or equal to $0.55\frac{dB}{cm}$.

Further, the waveguide 100 may be associated with a propagation loss parameter that is less than at least one of a propagation loss parameter associated with the first layer 115 of each of the sets of layers 110 or a propagation loss parameter associated with the second layer 120 of each of the sets of layers 110. That is, the waveguide 100 (e.g., due to the "effective" aggregation of respective propagation loss parameters of the first layer 115 and the second layer 120 of each of the sets of layers 110) may have a propagation loss parameter that is less than a propagation parameter of at least one individual layer of each of the sets of layers 110.

As indicated above, Figs. 2A-2B are provided as examples. Other examples may differ from what is described with regard to Figs 2A-2B. In practice, the plurality of modes 205 may propagate within additional layers, components, and/or structures; fewer layers, components, and/or structures; different layers, components, and/or structures; or differently arranged layers, components, and/or structures than those shown in Figs. 2A-2B.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

As used herein, the term "X material," where $X$ is a chemical composition, such as $Ta_2O_5$, $SiO_2$, or Si:H, indicates that at least a threshold percentage of $X$ is included in the $X$ material. The threshold percentage may be, for example, greater than or equal to 1%, 5%, 10%, 25%, 50%, 75%, 85%, 90%, 95%, and/or 99%. Also, when a material is referred to by a specific chemical name or formula, the material may include non-stoichiometric variations of the stoichiometrically exact formula identified by the chemical name. For example, the silicon dioxide ($SiO_2$) material described herein may include $SiO_x$, where x is in a range from 0.8 to 1.2.

**Claims**

1. A waveguide, comprising:

   a substrate; and
   a plurality of sets of layers disposed on the substrate in a stack, wherein each set of layers includes:

   a first layer that comprises at least tantalum and oxygen; and
   a second layer that comprises at least silicon and oxygen, wherein:

   the waveguide is configured to propagate light associated with a particular wavelength in a first direction that is orthogonal to a second direction in which the plurality of sets of layers are disposed on the substrate in the stack, and
   respective thicknesses of the first layer and the second layer, in the second direction, are less than or equal to a fifteenth of the particular wavelength.

2. The waveguide of claim 1, wherein:
   the respective thicknesses of the first layer and the second layer, in the first direction, are greater than or equal to 1 nanometer and less than or equal to 20 nanometers.

3. The waveguide of claim 1 or claim 2, wherein:
   a quantity of the plurality of sets of layers is greater than or equal to 15.

4. The waveguide of any of claims 1 to 3, wherein:
   the plurality of sets of layers comprise a form birefringent (FB) stack.

5. The waveguide of any of claims 1 to 4, wherein:
   the particular wavelength is associated with a spectral range from 400 to 799 nanometers.

6. A waveguide, comprising:
   a plurality of sets of layers arranged in a stack, wherein each set of layers includes:

   a first layer that comprises at least tantalum and oxygen; and
   a second layer that comprises at least silicon and oxygen, wherein:

   the waveguide is configured to propagate light associated with a particular wavelength in a first direction that is orthogonal to a second direction in which the plurality of sets of layers are arranged in the stack, and
   a quantity of the plurality of sets of layers is greater than or equal to 15.

7. The waveguide of any of claims 1 to 6, wherein:

   the first layer comprises at least a tantalum pentoxide ($Ta_2O_5$) material; and
   the second layer comprises at least a silicon dioxide ($SiO_2$) material.

8. The waveguide of claim 6 or claim 7, wherein: respective thicknesses of the first layer and the second layer, in the first direction, are greater than or equal to 1 nanometer and less than or equal to 20 nanometers.

9. The waveguide of any of claims 1 to 8, wherein: the plurality of sets of layers cause the waveguide to have, for the particular wavelength, an ordinary refractive index associated with the first direction and an extraordinary refractive index associated with the second direction.

10. The waveguide of claim 9, wherein: the extraordinary refractive index, for the particular wavelength, is less than a refractive index of the first layer and greater than a refractive index of the second layer.

11. The waveguide of any of claims 1 to 10, wherein: the waveguide is associated with a propagation loss parameter that is less than at least one of a propagation loss parameter associated with the first layer or a propagation loss parameter associated with the second layer.

12. A waveguide, comprising: a plurality of sets of layers arranged in a stack, wherein each set of layers includes:

    a first layer that comprises at least a first material; and
    a second layer that comprises at least a second material, wherein:

    the waveguide is configured to propagate light associated with a particular wavelength in a first direction that is orthogonal to a second direction in which the plurality of sets of layers are arranged in the stack, and a quantity of the plurality of sets of layers is greater than or equal to 15.

13. The waveguide of claim 12, wherein: the waveguide is associated with a propagation loss parameter that is less than at least one of a propagation loss parameter associated with the first layer or a propagation loss parameter associated with the second layer.

14. The waveguide of claim 12 or claim 13, wherein: respective thicknesses of the first layer and the second layer, in the first direction, are greater than or equal to 1 nanometer and less than or equal to 20 nanometers.

15. The waveguide of any of claims 12 to 14, wherein:

the plurality of sets of layers cause the waveguide to have, for the particular wavelength, an extraordinary refractive index associated with the second direction;
optionally wherein the extraordinary refractive index, for the particular wavelength, is less than a refractive index of the first layer and greater than a refractive index of the second layer.

FIG. 1A

**FIG. 1B**

EP 4 556 971 A1

**FIG. 2A**

**FIG. 2B**

Europäisches
Patentamt

European
Patent Office

Office européen
des brevets

## EUROPEAN SEARCH REPORT

| Application Number |
| --- |
| EP 24 18 6681 |

### DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2021/255396 A1 (VENKATESAN SURESH [US] ET AL) 19 August 2021 (2021-08-19) * paragraphs [0102], [0104], [0106]; figures 7a-b * | 1-15 | INV. G02B6/126 ADD. G02B6/12 |
| X | EP 1 219 983 A2 (NIPPON TELEGRAPH & TELEPHONE [JP]) 3 July 2002 (2002-07-03) * paragraphs [0058] - [0059], [0165] - [0169]; figures 4A-B,22A-B * | 1-11, 13-15 | |
| A | US 2009/046979 A1 (ZHOU YAN [US] ET AL) 19 February 2009 (2009-02-19) * claim 6 * | 1,6,7 | |
| A | US 2002/027655 A1 (KITTAKA SHIGEO [JP] ET AL) 7 March 2002 (2002-03-07) * paragraph [0115] * | 5 | |

| | TECHNICAL FIELDS SEARCHED (IPC) |
| --- | --- |
| | G02B |

The present search report has been drawn up for all claims

| Place of search | Date of completion of the search | Examiner |
| --- | --- | --- |
| The Hague | 25 November 2024 | Pantelakis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6681

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| US 2021255396 A1 | 19-08-2021 | US 2020257053 A1 | 13-08-2020 |
| | | US 2020257054 A1 | 13-08-2020 |
| | | US 2021231877 A1 | 29-07-2021 |
| | | US 2021255396 A1 | 19-08-2021 |
| EP 1219983 A2 | 03-07-2002 | EP 1219983 A2 | 03-07-2002 |
| | | US 2002122650 A1 | 05-09-2002 |
| US 2009046979 A1 | 19-02-2009 | US 2005036738 A1 | 17-02-2005 |
| | | US 2009046979 A1 | 19-02-2009 |
| US 2002027655 A1 | 07-03-2002 | CN 1342910 A | 03-04-2002 |
| | | EP 1184708 A2 | 06-03-2002 |
| | | US 2002027655 A1 | 07-03-2002 |

EPO FORM P0459

For more details about this annex : see Official Journal of the European Patent Office, No. 12/82

**EP 4 556 971 A1**

**REFERENCES CITED IN THE DESCRIPTION**

**Patent documents cited in the description**

- US 63599264

- US 63599231